Europäisches Patentamt

European Patent Office

Office européen des brevets

(11) Publication number: **0 045 535**
**B1**

(12) **EUROPEAN PATENT SPECIFICATION**

(45) Date of publication of patent specification: 02.10.85

(51) Int. Cl.⁴: **G 01 K 7/02, G 01 N 33/20**

(21) Application number: **81200750.8**

(22) Date of filing: **02.07.81**

(54) Immersion measuring probe for use in liquid metals.

<table>
<tr><td>

(30) Priority: **22.07.80 BE 2058663**

(43) Date of publication of application:
**10.02.82 Bulletin 82/06**

(45) Publication of the grant of the patent:
**02.10.85 Bulletin 85/40**

(84) Designated Contracting States:
**AT CH DE FR GB IT LI NL SE**

(56) References cited:
**GB-A-1 033 937**
**GB-A-1 095 106**
**GB-A-1 154 738**
**US-A-2 374 377**
**US-A-3 011 005**

**G G Hawley, "The Condensed Chemical
Dictionary", ninth edition, 1977, van Nostrand
Reinhold Company, New York**

**The file contains technical information
submitted after the application was filed and
not included in this specification**

</td><td>

(73) Proprietor: **ELECTRO-NITE N.V.**
**Grote Baan 27a**
**B-3530 Houthalen (BE)**

(72) Inventor: **Bollen, Theo**
**Kneippstraat 72**
**B-3600 Genk (BE)**

(74) Representative: **Donné, Eddy**
**M.F.J.Bockstael Arenbergstraat 13**
**B-2000 Anvers (BE)**

(56) References cited:

**H.Scholze, "Glas-Natur, Struktur und
Eigenschaften", second edition , 1977, Springer
Verlag, Berlin.**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to immersion measuring probes for use in liquid metals.

For measuring e.g. the temperature and/or oxygen content of a liquid metal mostly immersion probes are used which traditionally consist of a tube whose extremity to be immersed is sealed by a stopper-shaped measuring head carrying one or more measuring elements as well as a corresponding numbers of connectors. The measuring elements protrude from the measuring head at the side of the latter to be immersed and the connectors retrude at the other side.

Upon use such a measuring probe is slid over a supporting lance whereby a connector takes contact with a contact block provided for that purpose in the lance. Said contact block is connected to a measuring instrument through electric conductors running through the lance.

The protruding parts of the measuring elements are usually protected by metal caps mounted on the measuring heads, which caps melt away upon immersion in the liquid metal.

The tubes are mostly made of cardboard. Sometimes they are provided with an insulating protective sleeve in order to prevent splashing and vibrations on immersion.

Measuring probes as described above are only suitable for single use mainly because metal particles adhere to the measuring elements when the probes are withdrawn from the liquid metal after the first measurement whereby a second measurement becomes impossible.

Finally, there are known probes wherein a protective sleeve is arranged around the measuring element. Said sleeve provided protection for the measuring element during the handling thereof but is quickly destroyed by the heat of the molten metal both to permit a temperature reading to be obtained. Such like protective sleeves are disclosed in US—A—3.011.005 and may be made from fibreboard or the like.

The main object of the invention is to avoid this drawback and thus to allow several measurements with one and the same immersion probe.

Another object of the invention is the simplification in many cases of the manufacture of the immersion probe or in lowering the costprice of it.

In accordance with the invention, an immersion measuring probe for use in liquid metals, of the type comprising a measuring head carrying at least one measuring element, the head being fixed to an extremity of a tube which tube is arranged to be slid onto a supporting lance, said head having at least one projection partly surrounding the measuring element and extending from the head farther than said measuring element and made of a heat-resistant material, is characterized in that said heat-resistant material is a ceramic material with a density not exceeding substantially 2,5 g/cm³, said projection being fully spaced away from said measuring element and at a distance therefrom in a direction perpendicular to the axis of the probe, not larger than substantially 2,5 cm, the thickness of the projection in a direction perpendicular to the axis of the probe amounting to substantially 10 mm.

In contradiction with the generally accepted view that the measuring element indeed has to be the extreme part of the probe in order to expose it optimally to the liquid metal, it has been found that the extension(s) or projection(s) of a probe according to the present invention have absolutely no deleterious effect on the measurement and that no metal or slag adhered to the measuring element when the probe was withdrawn from the bath.

The invention is now described more in detail by means of the accompanying drawings, wherein:

Figure 1 is a perspective view of an embodiment of a measuring probe according to the invention;

Figure 2 represents the probe according to Figure 1 in axial section;

Figure 3 is a perspective view of a second embodiment;

Figure 4 represents a variant similar to that of Figure 2 and

Figure 5 is a perspective view of a third variant.

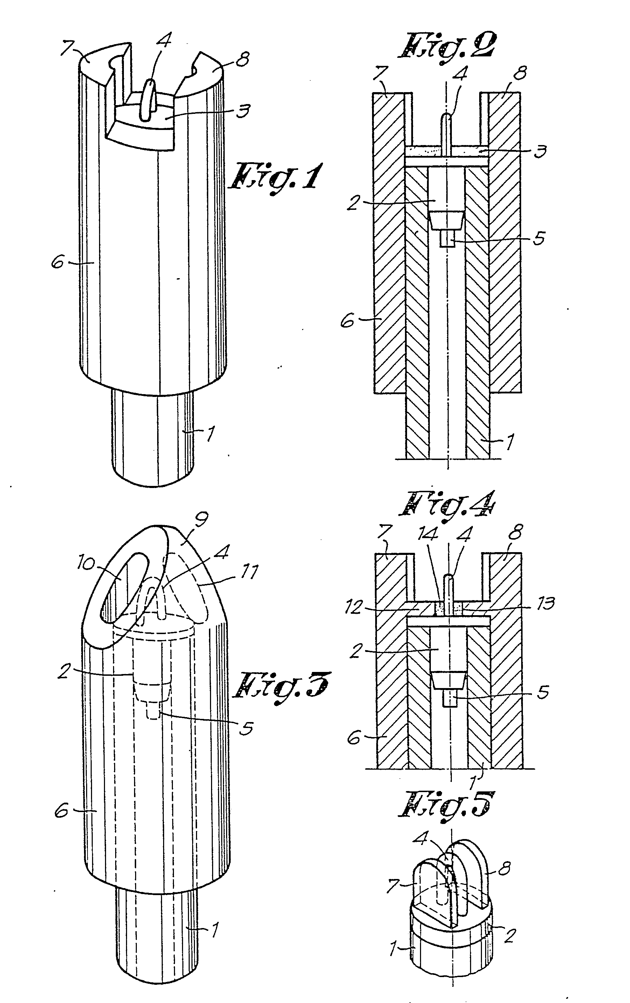

The measuring probe according to Figures 1 and 2 consists of a cardboard tube 1, suited for being slid over a supporting lance (not shown) and at one side is provided with a measuring head 2. This measuring head 2 is in the form of a stopper and seals the cardboard tube 1. At the side to be immersed in the metal bath it is insulated by a layer 3 of a well insulating refractory material such as refractory cement or ceramic fibres. At the side turned away from tube 1 the measuring head 2 contains the measuring element being in this case a thermocouple 4, whereas at the other side it is provided with a connector 5.

The side of the measuring probe to be immersed is enveloped by an insulating sleeve 6 made of a ceramic fibre such as aluminium oxide, aluminium silicate, zirconium oxide, quartz, etc. which has a wall thickness of about 10 mm (±20%).

The wall of sleeve 6 extends itself at the place of the measuring element by two symmetrically placed projections 7 and 8, which reach e.g. 0.5 cm farther than the small U-shaped thermocouple tube.

In the embodiment according to Figure 3 the whole wall of sleeve 6 extends to a dome-shaped extremity 9 wherein two windows 10 and 11 are cut out.

Finally, in the variant of Figure 4 sleeve 6 is provided with a partition 12 with central opening 13 through which the measuring element protrudes. A complete sealing is achieved by means of a small amount of refractory cement 14.

The presence of partition 12 results therein that the measuring head is still better insulated and that the so-called cold weldings will thus be heated less.

In the embodiment according to Figure 5 the projections 7 and 8 formed by two small plates made of a heat-resistant material of low density are directly carried by the measuring head 2 wherein they are partly embedded.

The heat-resistant material chosen for the projections and/or the sleeve according to the invention should have a density not exceeding about 2.5 g/cm$^3$. Experimentally it has been found that if the density is larger than this value the projections have too large a cooling action on the liquid metal surrounding the measuring element.

On the other hand the distance between projection and measuring element measured in a direction perpendicular to the axis of the probe should not exceed about 2.5 cm in order to be sure to avoid any adhesion of metal to the measuring element.

The immersion measuring probe according to the invention have still other advantages:

— the projections or projecting parts of the sleeves protect the measuring elements from mechanical damage during transport and immersion so that the usual protective caps of metal and/or cardboard become superfluous;

— upon immersion in a shallow metal bath the measuring element cannot strike the bottom which would result in a faulty measurement or even in a rupture.

It is clear that the invention is not limited to the described embodiments and that the latter can be modified without departing from the scope of the invention.

## Claims

1. Immersion measuring probe for use in liquid metals, of the type comprising a measuring head (2) carrying at least one measuring element (4), the head being fixed to an extremity of a tube (1) which tube is arranged to be slid onto a supporting lance, said head having at least one projection (7—9) partly surrounding the measuring element (4) and extending from the head farther than said measuring element (4) and made of a heat-resistant material, characterized in that said heat-resistant material is a ceramic material with a density not exceeding substantially 2,5 g/cm$^3$, said projection (7—9) being fully spaced away from said measuring element (4) and at a distance therefrom in a direction perpendicular to the axis of the probe, not larger than substantially 2,5 cm, the thickness of the projection (7, 8, 9) in a direction perpendicular to the axis of the probe amounting to substantially 10 mm.

2. Immersion measuring probe according to claim 1, characterized in that the projection (7, 8, 9) is formed by an extension of the wall either of a protective sleeve (6) enveloping the said tube (1) in a known way, or of the tube (1) itself.

3. Immersion measuring probe according to claim 2, characterized in that the wall has two local extensions (7, 8) which are placed symmetrically with respect to the axis of the sleeve (6) or tube (1).

4. Immersion measuring probe according to claim 2, characterized in that the whole wall extends to a dome-shaped extremity (9) of the sleeve (6) or tube (1) wherein at least two windows (10, 11) are cut out.

## Patentansprüche

1. Tauchmessonde für Messungen in Metallschmelzen der mit einem wenigstens ein Messelement (4) aufweisenden Messkopf (2) ausgestatteten Art, wobei dieser Messkopf (2) am Ende eines auf einer Lanze aufschiebbaren Rohres (1) montiert ist und wenigstens einen herausragende, das Messelement (4) teilweise umgebenden, sich oberhalb des Scheitels des Messelementes erstreckenden, aus einem feuerfesten Material hergestellten Teil (7—9) aufweist, dadurch gekennzeichnet, dass dieses feuerfeste Material ein geeignetes Keramikmaterial ist, dessen Raumgewicht nicht grösser ist als etwa 2,5 g/cm$^3$, und der vorgenannte herausragende Teil (7—9) ganz vom Messelement (4) entfernt ist, wobei der in der Querrichtung in bezug auf die Messonderachse gemessene Abstand zwischen dem herausragenden Teil und dem Messelement (4) nicht grösser ist als etwa 2,5 cm und die ebenfalls in der Querrichtung in bezug auf die Messondenachse gemessene Wandstärke des herausragenden Elementes (7—9) ungefähr 10 mm beträgt.

2. Tauchmessonde gemäss dem Anspruch 1, dadurch gekennzeichnet, dass der vorgenannte herausragende Teil (7—9) ein Vorsprung der Wand einer bekannterweise das vorgenannte Rohr (1) umgebenden Schutzhülle (6) oder dieses Rohres (1) selbst ist.

3. Tauchmessonde gemäss dem Anspruch 2, dadurch gekennzeichnet, dass die Wand mit zwei örtlichen, symmetrisch in bezug auf die Achse der vorgenannten Hülle (6) bzw. des vorgenannten Röhres (1) angeordneten Vorsprüngen (7, 8) versehen ist.

4. Tauchmessonde gemäss dem Anspruch 2, dadurch gekennzeichnet, dass die Gesamtwand durch ein kuppelförmiges Gebilde (9) der vorgenannten Hülle (6) oder des vorgenannten Rohres (1) verlängert ist und dieses kuppelförmige Gebilde zwei Fenster (10, 11) aufweist.

## Revendications

1. Sonde de mesure à immersion destinée à effectuer des mesures dans des métaux en fusion, du type équipé d'une tête de mesure (2) munie d'au moins un élément de mesure (2) et montée sur l'extrémité d'un tube (1) susceptible d'être glissé sur une lance, et présentant au moins une partie saillante (7—9) entourant partiellement l'élément de mesure (4), s'étendant au-delà de la tête de ce dernier et fait d'un matériau réfractaire approprié, caractérisée en ce que ce matériau réfractaire est un matériau céramique dont le poids spécifique n'est pas supérieur à environ 2,5 g/cm$^3$, et en ce que ladite partie saillante (7—9) s'écarte totalement de l'élément de mesure (4) d'une distance qui, mesurée en direction transversale par rapport à l'axe de la sonde de mesure, n'est pas supérieure à environ 2,5 cm, l'épaisseur de cette partie saillante (7—9), également mesurée en direction transversale par rapport à l'axe de la sonde de mesure, étant égale à environ 10 mm.

2. Sonde de mesure à immersion selon la revendication 1, caractérisée en ce que ladite partie saillante (7—9) se compose d'une saillie de la paroi d'une enveloppe (6) entourant de manière connue le tube (1) de la sonde, ou de ce tube (1) lui-même.

3. Sonde de mesure à immersion selon la revendication 2, caractérisée en ce que ladite paroi présente deux saillies locales (7, 8), disposées symétriquement par rapport à l'axe de ladite enveloppe (6) ou dudit tube (1).

4. Sonde de mesure à immersion selon la revendication 2, caractérisée en ce que ladite paroi est totalement prolongée par une extrémité en forme de coupole (9) de l'enveloppe (6) ou du tube (1), dans laquelle sont prévues au moins deux fenêtres (10, 11).

*Fig.1*

*Fig.2*

*Fig.3*

*Fig.4*

*Fig.5*

1